# EUROPEAN PATENT SPECIFICATION

(11) **EP 0 327 097 B1**
(45) Date of publication and mention of the grant of the patent: **07.09.1994**
(21) Application number: 89101870.7
(22) Date of filing: 03.02.1989
(51) Int. Cl.: C10L 1/22, C08F 8/32, C07D 207/40, C10C 1/14

(54) **ORI-inhibited motor fuel composition and storage stable concentrate**
O.R.I.-gehemmte Motorbrennstoffzusammensetzung, und einlagerungsbeständiges Konzentrat
Composition de combustible pour moteur inhibée contre l'augmentation du besoin en octane, et concentré stable au stockage

(30) Priority: 27.06.1988 US 211937; 04.02.1988 US 152227
(43) Date of publication of application: 09.08.1989
(73) Proprietor: TEXACO DEVELOPMENT CORPORATION, White Plains, New York 10650 (US)
(72) Inventor: Lu-Dai Sung, Rodney, Fishkill, N.Y. 12524 (US)
(74) Representative: Brock, Peter William

(56) References cited:
- EP-A- 0 062 940
- DE-A- 2 616 751
- FR-A- 1 265 086
- US-A- 3 154 560
- US-A- 3 438 757
- US-A- 4 151 173
- US-A- 4 313 764
- US-A- 4 645 515
- US-A- 4 659 336
- US-A- 4 747 851

## Description

This invention relates to a novel reaction product composition, an ORI-inbibited motor fuel composition, a bifunctional deposit- and ORI- inhibited motor fuel composition, and a precipitation-resistant concentrate formulation for use in motor fuel compositions. More particularly, this invention relates to a composition obtained by reacting a hydrocarbyl-substituted dibasic acid anhydride and a polyoxyalkylene diamine, an ORI-inbibited motor fuel composition comprising a base fuel containing the reaction product of (i) a hydrocarbyl-substituted dibasic acid anhydride and a (ii) polyoxyalkylene diamine and an optional polymeric component which is a polyolefin polymer/copolymer or the corresponding aminated or hydrogenated polymer/copolymer, or mixtures thereof, of a C₂-C₁₀ hydrocarbon. The instant invention also relates to additive concentrates of the abovedescribed components in admixture with a hydrocarbon solvent which facilitates introduction of the concentrate into a motor fuel composition. Such concentrates are precipitation-resistant, thereby enhancing the storage stability of the concentrate.

Combustion of a hydrocarbon motor fuel in an internal combustion engine generally results in the formation and accumulation of deposits on various parts of the combustion chamber as well as on the fuel intake and exhaust systems of the engine. The presence of deposits in the combustion chamber seriously reduces the operating efficiency of the engine. First, deposit accumulation within the combustion chamber inhibits heat transfer between the chamber and the engine cooling system. This leads to higher temperatures within the combustion chamber, resulting in increases in the end gas temperature of the incoming charge. Consequently, end gas auto-ignition occurs, which causes engine knock. In addition, the accumulation of deposits within the combustion chamber reduces the volume of the combustion zone, causing a higher than design compression ratio in the engine. This, in turn, also results in serious engine knocking. A knocking engine does not effectively utilize the energy of combustion. Moreover, a prolonged period of engine knocking will cause stress fatigue and wear in vital parts of the engine. The above-described phenomenon is characteristic of gasoline powered internal combustion engines. It is usually overcome by employing a higher octane gasoline for powering the engine, and hence has become known as the engine octane requirement increase (ORI) phenomenon. It would therefore be highly advantageous if engine ORI could be substantially reduced or eliminated by preventing or modifying deposit formation in the combustion chambers of the engine.

Another problem common to internal combustion engines relates to the accumulation of deposits in the carburetor which tend to restrict the flow of air through the carburetor at idle and at low speed, resulting in an overrich fuel mixture. This condition also promotes incomplete fuel combustion and leads to rough engine idling and engine stalling. Excessive hydrocarbon and carbon monoxide exhaust emissions are also produced under these conditions. It would therefore be desirable from the standpoint of engine operability and overall air quality to provide a motor fuel composition which minimizes or overcomes the above-described problems.

A third problem common to internal combustion engines is the formation of intake valve deposits. Intake valve deposits interfere with valve closing and eventually result in valve burning. Such deposits interfere with valve motion and valve sealing, and in addition reduce volumetric efficiency of the engine and limit maximum power. Valve deposits are usually a result of thermal and oxidative unstable fuel or lubricating oil oxidation products. Hard carbonaceous deposits collect in the tubes and runners that conduct ther exhaust gas recirculation (EGR) gases. These deposits are believed to be formed from exhaust particles which are subjected to rapid cooling while mixing with the air-fuel mixture. Reduced EGR flow can result in engine knock and NOₓ emission increases. It would therefore be desirable to provide a motor fuel composition which minimizes or overcomes the formation of intake valve deposits.

US-A-4151173 (Lubrizol) relates to oil-soluble acylated-nitrogen compositions which may be obtained by reacting at least one carboxylic acid or carboxylic-producing compound with an effective amount of at least one high molecular weight polyoxyalkylene polyamine, said polyamine having an average molecular weight of at least about 200. The compositions are described as being useful as additives for lubricants and fuels, eg. gasoline.

Co-assigned U. S. Patent 4,659,337 discloses the use of the reaction product of maleic anhydride, a polyether polyamine containing oxyethylene and oxypropylene ether moieties, and a hydrocarbyl polyamine in a gasoline motor fuel to reduce engine ORI and provide carburetor detergency;
Co-assigned U. S. Pat. 4,659,336 discloses the use of the mixture of: (i) the reaction product of maleic anhydride, a polyether polyamine containing oxyethylene and oxypropylene ether moieties, and a hydrocarbyl polyamine; and (ii) a polyolefin polymer/copolymer as an additive in motor fuel compositions to reduce engine ORI;
Co-assigned U. S. Pat. 4,631,069 discloses an alcohol-containing motor fuel composition which additionally comprises an anti-wear additive which is the reaction product of a dibasic acid anhydride, a polyoxyisopropylene diamine of the formula 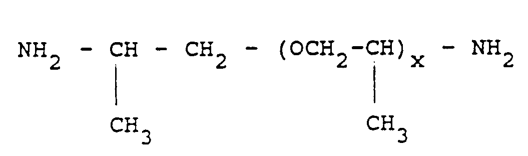
where x has a value of 2-68, and an n-alkyl-alkylene diamine;
Co-assigned U. S. Pat. 4,643,738 discloses a motor fuel composition comprising a deposit-control additive which is the reaction product of a dibasic acid anhydride, a polyoxyisopropylene diamine of the formula 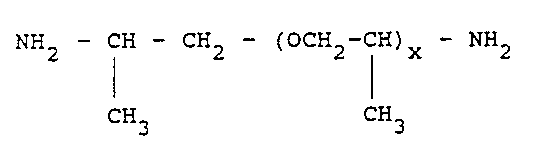
where x has a value of 2-50, and an n-alkyl-alkylene diamine;
U. S. Pat. No. 4,604,103 discloses a motor fuel deposit control additive for use in internal combustion engines which maintains cleanliness of the engine intake system without contributing to combustion chamber deposits or engine ORI. The additive disclosed is a hydrocarbyl polyoxyalkylene polyamine ethane of molecular weight range 300-2500 having the formula 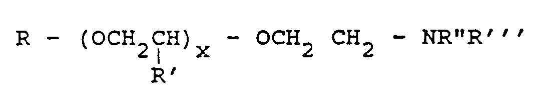
where R is a hydrocarbyl radical of from 1 to about 30 carbon atoms; R′ is selected from methyl and ethyl; x is an integer from 5 to 30; and R'' and R''' are independently selected from hydrogen and -(CH₂CH₂NH-)_{y}-H where y is an integer from 0-5; and
Co-assigned U. S. Pat. No. 4,581,040 discloses the use of a reaction product as a deposit inhibitor additive in fuel compositions. The reaction product is a condensate product of the process comprising:
(i) reacting a dibasic acid anhydride with a polyoxyisopropylenediamine of the formula 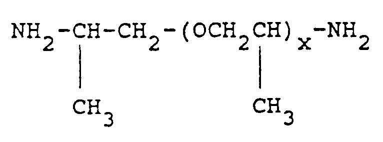 where x is a numeral of about 2-50, thereby forming a maleamic acid;
(ii) reacting said maleamic acid with a polyalkylene polyamine, thereby forming a condensate product; and
(iii) recovering said condensate product.

Motor fuel compositions which contain amine additives to control deposition include the following:
U. S. 4,357,148 discloses a motor fuel additive useful in controlling ORI which is the combination of (a) an oil-soluble aliphatic polyamine containing at least one olefinic polymer chain, and (b) a polymer, copolymer, or corresponding hydrogenated polymer or copolymer of a C₂-C₆ mono olefin with a molecular weight of 500-1500;
U. S. 4,166,726 discloses a fuel additive which is the combination of (i) the reaction product of an alkylphenol, an aldehyde, and an amine, and (ii) a polyalkylene amine;
U. S. 3,960,515 and U. S. 3,898,056 disclose the use of a mixture of high and low molecular weight hydrocarbyl amines as a detergent and dispersant in motor fuel compositions; and
U. S. 3,438,757 discloses the use of hydrocarbyl amines and polyamines with a molecular weight range of 450-10,000, alone or in combination with a lubricating mineral oil, as a detergent for motor fuel compositions.

An object of this invention to provide a reaction product composition which may be employed as an ORI-reducing additive in motor fuel compositions. Another object of this invention is to provide a method of blending the reaction product composition of the instant invention, either alone or in combination with the hereindescribed polyolefin polymer/copolymer, into a base motor fuel composition. Another object of this invention is to provide a motor fuel composition which is deposit-resistant and exhibits ORI-inhibition when employed in an internal combustion engine. Yet another object of this invention is to provide a concentrate composition which may be added to a motor fuel to provide motor fuel compositions of the instant invention.

It is a feature of motor fuel compositions of the instant invention that combustion chamber deposit formation is minimized, with concomitant reduction of engine ORI. It is another feature of this invention that such motor fuel composition are deposit-resistant and specifically exhibit reduced intake valve deposit formation. It is yet another feature of this invention that the concentrate composition of this invention may be admixed with a motor fuel to minimize combustion chamber deposit formation, and hence inhibit engine ORI.

It is an advantage of this invention that motor fuel compositions of the instant invention exhibit reduced engine ORI and reduced valve deposit formation. It is another advantage of this invention that concentrate compositions of the instant invention exhibit resistance to precipitation, and thereby have enhanced storage stability.

According to this invention, a novel reaction product which provides ORI-inhibiting properties to a motor fuel composition is obtained by reacting, at a temperature of 30°C-200°C:
(a) 1.5-2.5 moles, preferably 2 moles of hydrocarbyl-substituted dibasic acid anhydride of the formula 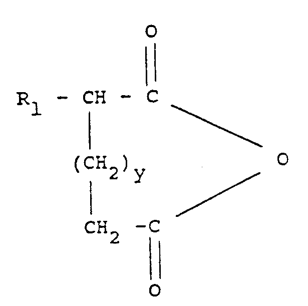 where R₁ is a hydrocarbyl radical, preferably a polypropenyl or polybutenyl radical, most preferably a polyisobutenyl radical, having a molecular weight in the range of 500-10,000, preferably 500-2500, most preferably 600-1500 and y has a value of 0-3; and
(b) 0.5-1.5 moles, preferably 1 mole of a polyoxyalkylene diamine of the formula 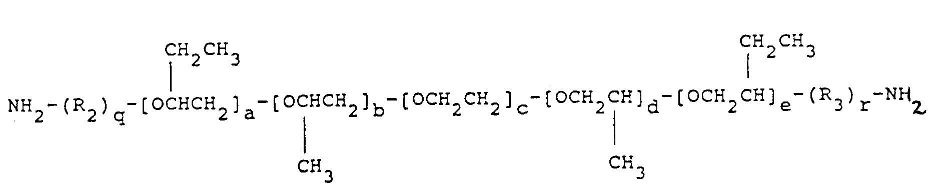 where R₂ and R₃ are C₁-C₁₂ alkylene groups, preferably C₂-C₆ alkylene groups, q and r are integers having a value of 0 or 1, preferably with q=1 and r=0, c has a value from about 2-150, preferably 2-50, b+d has a value from about 2-150, preferably 2-50 and a+e has a value from about 0-12, preferably 2-8.

The motor fuel composition of the instant invention comprises a mixture of hydrocarbons boiling in the range of 32°C-232°C (90°F-450°F) comprising from about 0.0005-5.0, preferably 0.001-1.0 weight percent of the abovedescribed reaction product, and, if employed, 0.001-1.0, preferably 0.01-0.5 weight percent of an optional polymeric component which is a polyolefin polymer or copolymer, or corresponding aminated or hydrogenated polymer or copolymer, or mixtures thereof, of a C₂-C₁₀, preferably a C₂-C₆ hydrocarbon. In a preferred embodiment, the polymeric component is a mixture of a major amount of polyisobutylene ethylene diamine and a minor amount of polyisobutylene in admixture with a suitable amount of hydrocarbon solvent. The motor fuel composition of the instant invention may additionally comprise 0.001-1.0, preferably 0.01-0.5 weight percent of a natural or synthetic lubricating oil.

This invention is also directed to an additive concentrate comprising a hydrocarbon solvent in admixture with 0.1-10.0 weight percent of the abovedescribed reaction product component and 25.0-75.0 weight percent of the abovedescribed polymer/copolymer-hydrocarbon solvent mixture. Concentrates of the instant invention exhibit improved storage stability and resistance to precipitation.

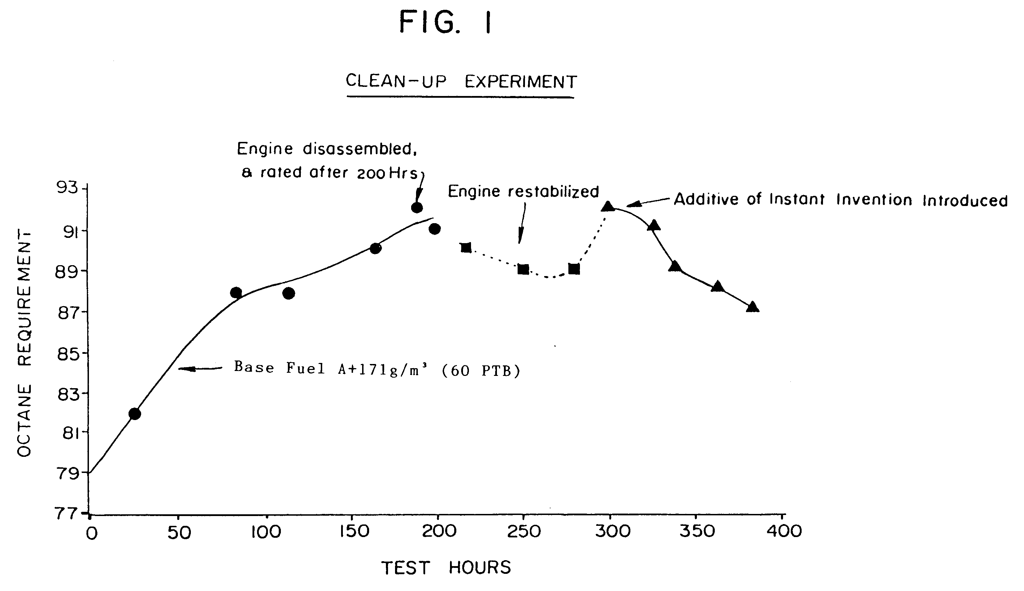

Referring now to the drawings, Figure 1 is a graphical representation of data obtained which compares the octane requirement (as a function of hours of engine operation) of a Chevrolet 2.0 liter engine initially using an commercial unleaded base fuel containing 171 g/m³ (60 PTB) of a commercial fuel additive, and the octane requirement of the identical engine after engine disassembly, reassembly, stabilization and introduction of the instant invention.

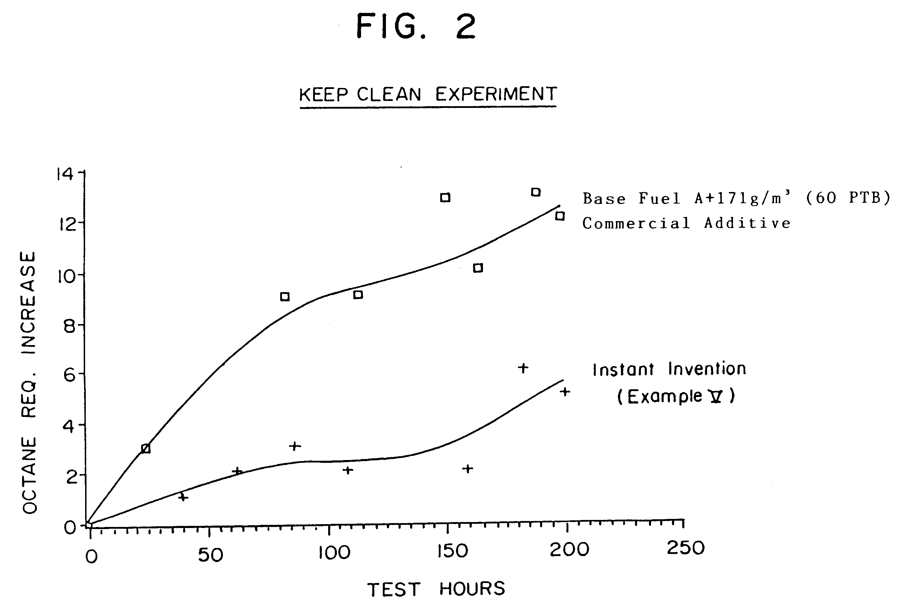

Figure 2 is a graphical representation of data obtained which compares: (i) the octane requirement (as a function of hours of engine operation) of a Chevrolet 2.0 liter engine using an unleaded base fuel containing 171 g/m³ (60 PTB) of a commercial fuel additive; and (ii) the octane requirement of the identical engine using a motor fuel composition of the instant invention which additionally comprises a commercial fuel additive.

The ORI-inhibiting additive of the invention is a reaction product prepared by reacting a hydrocarbyl-substituted dibasic acid anhydride and a diamine containing block copolymers with polyoxyalkylene backbones. The hydrocarbyl-substituted dibasic acid anhydride reactant used to prepare the reaction product additive of the instant invention may be represented by the formula 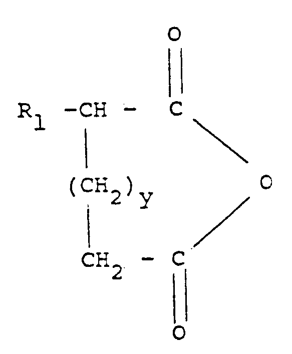
where R₁ is a hydrocarbyl radical, preferably a polypropenyl or polybutenyl radical, most preferably a polyisobutenyl radical, having a molecular weight range of 500-10,000, preferably 500-2500, most preferably 600-1500, say about 1290, and y has a value of 0-3. Where R₁ is the preferred polyisobutenyl radical, y preferably has a value of 0, and the preferred hydrocarbyl-substituted dibasic anhydride reactant for use is therefore a polyisobutenyl succinic acid anhydride of the formula: 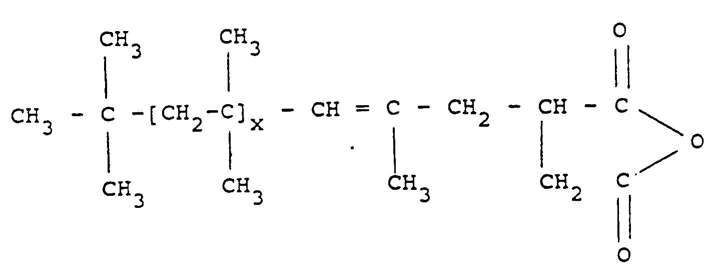
where x has a value of 10-20, preferably 20-25.This polyisobutenyl succinic acid anhydride is most preferably formed by reacting maleic anhydride and a polybutene such as a polybutene commercially available from Amoco Chemical Company under the INDOPOL series trade name, the most preferred polybutene reactant being commercially available as INDOPOL H-300. Methods of formulating the abovedescribed polyisobutyenyl succinic acid anhydride reactant are disclosed in, inter alia, U.S. Pat. Nos. 4,496,746 (Powell), 4,431,825 (Powell), 4,414,397 (Powell), and 4,325,876 (Chafetz).

The polyoxyalkylene diamine reactant used to prepare the reaction product component of the instant invention is a diamine of the formula 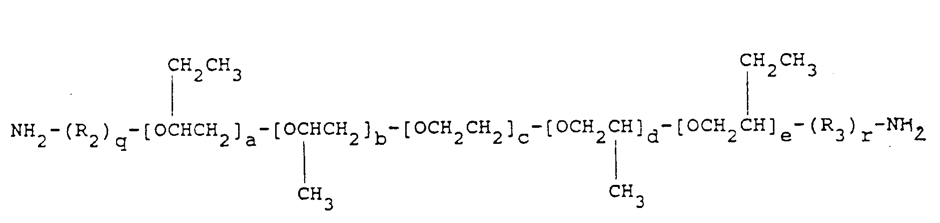
where R₂ and R₃ are C₁-C₁₂ alkylene groups, preferably C₂-C₆ alkylene group, most preferably a propylene or butylene group, q and r are integers having a value of 0 or 1, preferably with q=1 and r=0, c has a value from about 2-150, preferably 2-50; b + d has a value from about 2-150, preferably 2-50; and a + e has a value from about 0-12, preferably 2-8. In one preferred embodiment, q=1, r=0, R₂ is a butylene group and the polyoxyalkylene diamine reactant is therefore of the formula 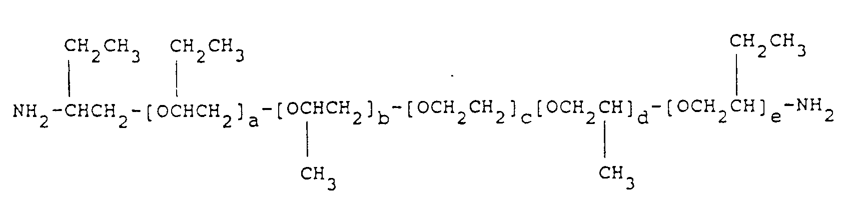
where c has a value of from 2-150, preferably 2-50, b+d has a value of from 2-150, preferably 2-50 and a+e has a value of 2-12, preferably 2-8.

In another preferred embodiment, q=1, r=0, R₂ is a propylene group, a+e has a value of zero, and the polyoxyalkylene diamine reactant is therefore of the formula 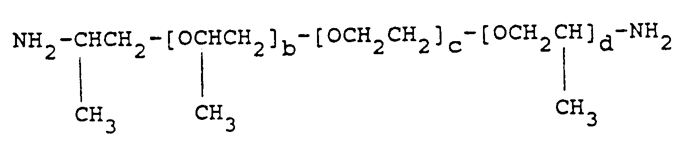
where c and b+d, respectively, have a value of from 2-150, preferably 2-50. Polyoxyalkylene diamines of the above structure suitable for use include those available from Texaco Chemical Co. under the JEFFAMINE ED-Series trade name. Specific examples of such compounds are set forth below:

| Trade Name | Approx. Value | | Approx. Mol. Wt. |
|---|---|---|---|
| | c | b+d | |
| ED-600 | 8.5 | 2.5 | 600 |
| ED-900 | 15.5 | 2.5 | 900 |
| ED-2001 | 40.5 | 2.5 | 2000 |
| ED-4000 | 86.0 | 2.5 | 4000 |
| ED-6000 | 131.5 | 2.5 | 6000 |

The reaction product component of the instant invention is prepared by reacting 1.5-2.5 moles, preferably 2 moles of hydrocarbyl-substituted dibasic acid anhydride with 0.5-1.5 moles, preferably 1 mole of the prescribed polyoxyalkylene diamine reactant, at a temperature of 30°C-200°C, preferably 90°C-150°C until all of the water has been removed from the system. The reaction is preferably carried out in the presence of a solvent. A preferred solvent is one which will distill with water azeotropically. Suitable solvents include hydrocarbons boiling in the gasoline boiling range of about 30°C to about 200°C. Generally, this will include saturated and unsaturated hydrocarbons having from about 5 to about 10 carbon atoms. Specific suitable hydrocarbon solvents include hexane, cyclohexane, benzene, toluene, and mixtures thereof. Xylene is the preferred solvent. The solvent can be present in an amount of up to about 90% by weight of the total reaction mixture. Once the reaction has been completed, the reaction product can then be separated from the solvent using conventional means, or left in admixture with some or all of the solvent.

The following examples illustrate the preferred method of preparing the reaction product of the instant invention. It will be understood that the following examples are merely illustrative, and are not meant to limit the invention in any way. In the examples, all parts are parts by weight unless otherwise specified.

### Example I

408 parts of polyisobutenyl succinic acid anhydride (prepared by reacting maleic anhydride and INDOPOL H-300), 779 parts of xylene, and 374.6 parts of a polyoxyalkylene diamine were reacted at a temperature of about 90-150°C. until no more water could be removed from the system. The polyoxyalkylene diamine was of the formula 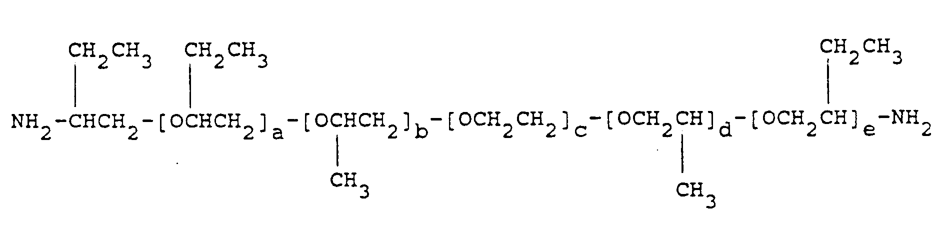
where c had an approximate value of 40.5, b+d had an approximate value of 40.5, and a+e had an approximate value of 2.5. The reaction product was then filtered and stripped of remaining solvent under vacuum, and identified by IR, NMR, and elemental analysis.

### Example II

2776 parts of polyisobutenyl succinic acid anhydride (prepared by reacting maleic anhydride and INDOPOL H-300), 4740 parts of xylene, and 2000 parts of a polyoxyalkylene diamine are reacted at a temperature of about 90-150°C until no more water can be removed from the system. The polyoxyalkylene diamine (JEFFAMINE ED-2001) may be represented by the formula 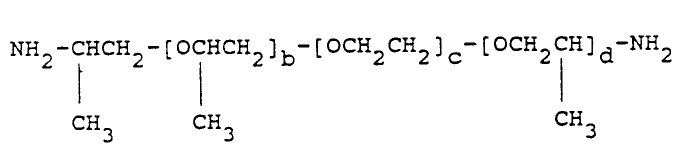
where c has an approximate value of 40.5, and b+d has an approximate value of 2.5.

Example I exemplifies the preferred method of forming and the preferred reaction product component of the instant invention. It is hypothesized that the active portion of the reaction product composition of Example I is a bis-polyisobutenyl succinimide having the structure: 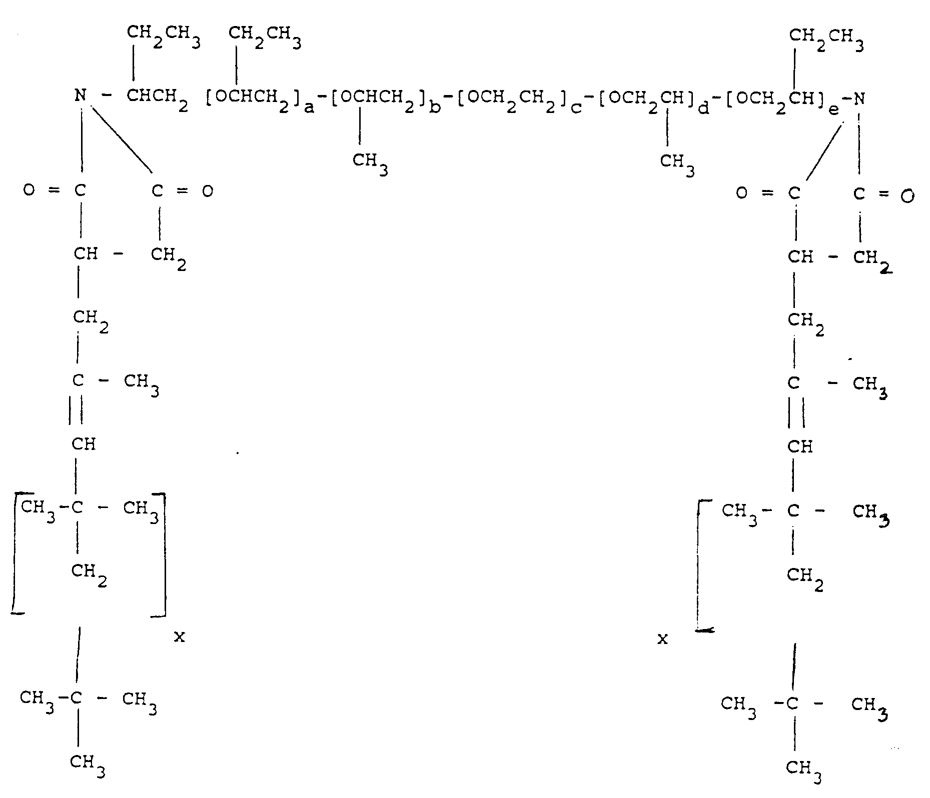
where x has a value of 21, c has an approximate value of 40.5, and a+e has an approximate value of 2.5.

The optional polymeric component of the motor fuel composition of the instant invention is a polyolefin polymer, copolymer, or corresponding aminated or hydrogenated polymer or copolymer, or mixtures thereof, of a C₂-C₁₀ hydrocarbon. The polymer/copolymer component is prepared from monoolefins and diolefins or copolymers thereof having an average molecular weight in the range from about 500-10,000, preferably 500-3500, most preferably about 650-2600. Mixtures of olefin polymers with an average molecular weight falling within the foregoing range are also effective. In general, the olefin monomers from which the polyofefin polymer component is prepared are preferably unsaturated C₂-C₆ hydrocarbons. Specific olefins which may be employed to prepare the polofin polymer component include ethylene, propylene, isopropylene, butylene, isobutylene, amylene, hexylene, butadiene, and isoprene. Propylene, isopropylene, butylene, and isobutylene are particularly preferred for use in preparing the polyolefin polymer component. Other polyolefins which may be employed are those prepared by cracking polyolefin polymers or copolymers of high molecular weight to a polymer in the above-noted molecular weight range. Derivatives of the noted polymers obtained by saturating the polymers by hydrogenation or amination of the polymers to produce polymeric mono or polyamines are also effective and are a part of this invention. As used in this description and in the appended claims, the phrase "polymers" is intended to include the polyolefin polymers and their corresponding hydrogenated or aminated derivatives. The optional polymeric component is usually employed in admixture with a hydrocarbon solvent to facilitate its addition into a base motor fuel composition.

In one preferred embodiment of the instant invention, the optional polymeric component is polypropylene with an average molecular weight of 750-1000, preferably about 800. In another preferred embodiment, the optional polymeric component is polyisobutylene with an average molecular weight of 1000-1500, preferably about 1300. In yet another preferred embodiment of the instant invention, the optional polymeric component is a mixture of a major amount of polyisobutylene ethylene diamine and a minor amount of polyisobutylene in admixture with a suitable amount of hydrocarbon solvent. In this embodiment, the polyisobutylene ethylene diamine subcomponent of the optional polymeric component is typically present in a concentration range of 50-75 parts, preferably about 60 parts by weight, based upon the weight of the entire composition which makes up the polymeric component. The polyisobutylene ethylene diamine subcomponent is of the formula 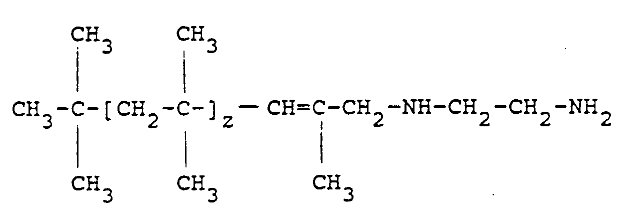
where z has a value of 10-40, preferably 30-35, say 33.

The polyisobutylene subcomponent of the optional polymeric component is typically present in a concentration range of 5-25 parts, preferably 10-20 parts by weight, based upon the weight of the entire composition which makes up the polymeric component. The polyisobutylene subcomponent is of the formula 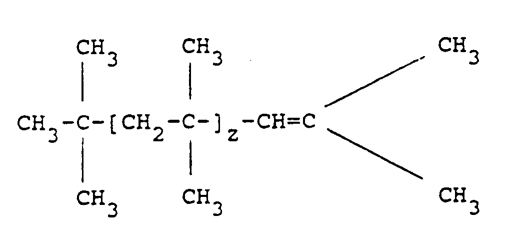
where z again has a value of 10-40, preferably 30-35, say 33.

The hydrocarbon solvent employed to facilitate admixture of the optional polymeric component into a base motor fuel composition is preferably a light aromatic distillate composition. A commercially available light aromatic distillate composition containing the abovedescribed polyisobutylene ethylene diamine and polyisobutylene compounds in the abovespecified concentrations and therefore most preferred for use as the optional polymeric component of the instant invention is the commercial gasoline additive ORONITE OGA-472, available from Chevron Chemical Company. ORONITE OGA-472 is a composition containing approximately 60 parts by weight of polyisobutylene ethylene diamine, approximately 13 parts by weight polyisobutylene, and approximately 27 parts by weight light aromatic distillate, including xylene and C₉ alkylbenzenes. Fuel compositions containing ORONITE OGA-472 as an additive include those described in U. S. Pat. Nos. 4,141,693, 4,028,065, and 3,966,429.

The motor fuel composition of the instant invention comprises a major amount of a base motor fuel and 0.0005-5.0 weight percent, preferably 0.001-1.0 weight percent of the abovedescribed reaction product. The fuel may also optionally comprise 0.001-1.0 weight percent, preferably 0.01-0.5 weight percent of the abovedescribed optional polymeric component. Preferred base motor fuel compositions are those intended for use in spark ignition internal combustion engines. Such motor fuel compositions, generally referred to as gasoline base stocks, preferably comprise a mixture of hydrocarbons boiling in the gasoline boiling range, preferably from about 32°C to 232°C (90°F to about 450°F). This base fuel may consist of straight chains or branched chains or paraffins, cycloparaffins, olefins, aromatic hydrocarbons, or mixtures thereof. The base fuel can be derived from, among others, straight run naphtha, polymer gasoline, natural gasoline, or from catalytically cracked or thermally cracked hydrocarbons and catalytically reformed stock. The composition and octane level of the base fuel are not critical and any conventional motor fuel base can be employed in the practice of this invention. An example of a motor fuel composition of the instant invention is set forth in Example III, below.

### Example III

85 g/m³ (30 PTB) of the reaction product set forth in Example I (i.e. 30 pounds of reaction product per 1000 barrels of gasoline, equivalent to about 0.01 weight percent of reaction product based on the weight of the fuel composition) is blended with a major amount cf a base motor fuel (herein designated as Base Fuel A) which is a premium grade gasoline essentially unleaded (less than 0.05 g of tetraethyl lead per gallon), comprising a mixture of hydrocarbons boiling in the gasoline boiling range consisting of about 22% aromatic hydrocarbons, 11% olefinic carbons, and 67% paraffinic hydrocarbons, boiling in the range from about 32°C-232°C (90°F to 450°F).

The ORI tendencies of Base Fuel A containing 171 g/m³ (60 PTB) of a commercial fuel additive (60 pounds of reaction product per 1000 barrels of gasoline, equivalent to about 0.02 weight percent of reaction product based on the weight of the fuel composition), as well as a motor fuel composition comprising a concentrate of the instant invention, as exemplified by Example IV, below, were measured in an Engine Clean-Up Test.

### Example IV

85 g/m³ (30 PTB) of the reaction product set forth in Example I (i.e. 30 pounds of reaction product per 1000 barrels of gasoline, equivalent to about 0.01 weight percent of reaction product component based on the weight of the fuel composition) and 585 g/m³ (205.5 PTB) (about 0.07 weight percent) of a composition (ORONITE OGA-472) containing approximately 60 parts by weight polyisobutylene ethylene diamine, approximately 13 parts by weight polyisobutylene, and approximately 27 parts by weight light aromatic distillate comprising xylene and C₉ alkylbenzenes were blended with 100 Pale oil.

In the Engine Clean-Up Test, the ORI tendencies of Base Fuel A containing 171 g/m³ (60 PTB) of a commercial fuel additive were measured in a 2.0 liter 1983 Chevrolet (Throttle Body Injector) multicylinder engine. The engine is a 2.0 liter Chevrolet in-line four cylinder engine with a cast alloy iron cylinder head having separate intake and exhaust ports for each cylinder. An electronically controlled fuel injection system maintains the required fuel flow to each engine cylinder by monitoring various engine operating parameters (e.g. manifold absolute pressure, throttle valve position, coolant temperature, engine r.p.m., and exhaust gas oxygen content) and adjusting the fuel flow accordingly. The fuel system supplying fuel to the engine is specifically adapted for the determination of engine ORI. At the beginning of the engine rating procedure, a fuel with an octane rating high enough to ensure that no audible engine knock is present is employed. The next lower octane fuel is then switched with the previous fuel, and this procedure continues until a knock becomes audible. The octane level one number above knock is the engine octane requirement. Engine ORI for the motor fuel composition comprising Base Fuel A plus 171 g/m³ (60 PTB) commercial additive was determined as a function of hours of engine operation until 200 hours of engine operation, whereupon the engine was disassembled and rated. The reassembled engine was then restarted and stabilized, at which point the concentrate composition of the instant invention (as exemplified by Example IV) was introduced into the composition comprising Base Fuel A plus 171 g/m³ (60 PTB) commercial fuel additive.

As illustrated by Figure 1, the octane requirement of the engine using the commercial gasoline was approximately a value of 92 at the time the engine was disassembled. After engine reassembly, restabilization, and introduction of the instant invention, the engine octane requirement was reduced from a value of about 92 at 300 hours of engine operation to a value of about 87 at 400 hours of engine operation. The data set forth in Figure 1 thus indicate that a motor fuel composition of the instant invention has reduced ORI tendencies in comparison with a typical commercially available gasoline.

The ORI tendencies of Base Fuel A containing 171 g/m³ (60 PTB) of a commercial fuel additive and a motor fuel composition of the instant invention (as exemplified by Example V, below) which additionally comprises 171 g/m³ (60 PTB) of a commercial fuel additive were also compared in an Engine Keep Clean Test.

### Example V

A motor fuel composition was prepared by blending Base Fuel A with 120 ppm (about 0.01 weight percent) of the reaction product set forth in Example I, 171 g/m³ (60 PTB) (about 0.02 weight percent) of a commercial fuel additive, and 822 ppm (about 0.07 weight percent) of a composition (ORONITE OGA-472) containing approximately 60 parts by weight polysobutylene ethylene diamine, approximately 13 parts by weight polyisobutylene, and approximately 27 parts by weight light aromatic distillate comprising xylene and C₉ alkylbenzenes.

In the Engine Keep Clean Test, engine octane requirement for a 2.0 liter 1983 Chevrolet (Throttle Body Injector) engine as a function of hours of engine operation was measured using the identical apparatus described for the Engine Clean Up Test. The experimental results obtained from the Keep Clean Test for Base Fuel A containing 171 g/m³ (60 PTB) commercial fuel additive and for a motor fuel composition of the instant invention (as exemplified by Example V) are set forth in Figure 2. As illustrated by Figure 2, the octane requirement of the engine using Base Fuel A containing 171 g/m³ (60 PTB) of commercial fuel additive was consistently higher than the corresponding octane requirement of the engine using a motor fuel composition of the instant invention (Example V) over the test duration period. The data set forth in Figure 2 thus indicate that a motor fuel composition of th instant invention is advantageous over a commercial fuel composition in terms of controlling engine ORI.

It has also been found that motor fuel compositions of the instant invention are effective in resisting the accumulation of deposits in the carburetor, intake manifold, and intake valves of internal combustion engines. The carburetor intake valve and intake manifold detergency properties of a commercially available motor fuel and a motor fuel composition of the instant invention (Example V) were measured via the Merit Rating Test. This test may be described as follows. After running a Chevrolet 2.0 liter engine with a given motor fuel composition, portions of the engine are disassembled and various engine components are visually examined to determine the extent of deposit formation. This is determined via a visual rating system scaled from 1-10, with a value of 10 being a clean component and a value of 1 being a deposit-laden component.

The experimental results obtained from the Merit Rating Test are set forth in Table I. As illustrated by Table I, a motor fuel composition of the instant invention (Example V) was approximately as effective (based upon merit ratings) as a commercially available fuel, and additionally showed improved valve deposit control.

**TABLE I**

| 1983 Chevrolet 2.0 liter Engine Merit Rating Results | | |
|---|---|---|
| | Instant Invention (Example V) | Base Fuel A + 171 g/m³ (60 PTB) Commercial Additive |
| DURATION OF TEST (HRS.) | 200 | 200 |

| MERIT RATINGS:* | | |
|---|---|---|
| TBI BODY | 8.3 | 9.7 |
| TBI PLATE | 8.1 | 8.6 |
| MANF. RUNNER | 9.5 | 7.5 |
| HEAD RUNNER | 8.5 | 7.3 |
| HEAD PORTS | 8.3 | 6.2 |
| VALVES | 8.0 | 6.5 |
| COMB. CHMBR. | 7.9 | 7.5 |
| PISTONS | 8.0 | 8.0 |

| | | |
|---|---|---|
| * Merit Rating of 10= clean (no deposits) | | |

For convenience in shipping and handling, it is useful to prepare a concentrate of the reaction product, either alone or together with the optional polymeric component of the instant invention. The concentrate may be prepared in a suitable liquid solvent such as toluene and xylene, with xylene being preferred. In a preferred mode of preparing a concentrate of the instant invention, approximately 0.1-10.0, preferably 5.0-10.0 weight percent of the reaction product of Example I, and approximately 25.0-75.0, preferably 50.0-60.0 weight percent of the abovedescribed aromatic distillate-polyisobutylene ethylene diamine-polyisobutylene mixture are employed in admixture with 25.0-50.0, preferably 30.0-40.0 weight percent of aromatic hydrocarbons, preferably xylene. All weight percents are based upon the total weight of the concentrate. As previously noted, concentrate compositions of the instant invention are advantageous over ORI-control concentrate formulations such as that disclosed in co-assigned U. S. Pat. Appl. Serial No. 84,354 (Sung et al.) in that concentrate compositions of this invention resist precipitation and hence may be more readily stored and transported.

Motor fuel and concentrate compositions of the instant invention may additionally comprise any of the additives generally employed in motor fuel compositions. Thus, compositions of the instant invention may additionally contain conventional carburetor detergents, anti-knock compounds such as tetraethyl lead compounds, anti-icing additives, upper cylinder lubricating oils, and the like. In particular, such additional additives may include compounds such as polyolefin polymers, copolymers, or corresponding hydrogenerated polymers or copolymers of C₂-C₆ unsaturated hydrocarbons, or mixtures thereof. Additional additives may include substituted or unsubstituted monoamine or polyamine compounds such as alkyl amines, ether amines, and alkyl-alkylene amines or combinations thereof.

In another preferred embodiment, the motor fuel composition of the instant invention additionally comprises 0.001-1.0, preferably 0.01-0.5 weight percent of a natural or synthetic lubricating oil. Suitable lubricating oils for use in the motor fuel composition of the instant invention are described, for example, at columns 29-30 of U. S. 4,670,173 (Hayashi et al.) and include natural oils such as animal oils, vegetable oils, mineral lubricating oils (e.g. liquid petroleum oils, solvent-treated and acid-treated mineral oils of paraffinic, napthenic, and mixed paraffinic-napthenic types), and lubricating oils derived from shale or coal.

Synthetic oils suitable for use include hydrocarbon oils, halo-substituted hydrocarbon oils such as polymerized and interpolymerized olefins, oligo-alkenes, alkylbenzenes, polyphenyls, alkylated diphenyl ethers and sulfides, and substituted and unsubstituted alkylene oxide polymers and copolymers (e.g. oils prepared through polymerization of ethylene oxide or propylene oxide, the alkyl and aryl ethers of these polyoxyalkylene polymers, or mono- and polycarboxylic esters thereof such as acetic acid or fatty acid esters). A particularly preferred class of synthetic lubricating oils suitable for use comprises esters and polyesters of mono- and dicarboxylic acids and mixtures thereof.

Another particularly preferred class of oils for use is unrefined or refined heavy oils. Unrefined oils are those obtained directly from a natural or synthetic source without further purification treatment. Refined oils are similar to unrefined oils except they have been further treated in one or more purification steps to improve one or more properties. Many such purification techniques (e.g. solvent extraction, secondary distillation, acid or base extraction, filtration, percolation) are well known to those skilled in the art.

This invention is also directed to a method of blending the reaction product composition, either alone or in combination with the abovedescribed optional polyolefin polymer/copolymer component, into a base motor fuel composition. The method of blending comprises introducing into the base fuel, which is a major amount of hydrocarbons boiling in the range from about 32°C-232°C (90°F-450°F), from 0.0005-5.0, preferably 0.001-1.0 weight percent of the abovedescribed reaction product of the instant invention. The reaction product may be directly introduced into the hydrocarbon base fuel, or it may first be admixed with a hydrocarbon solvent such as xylene, toluene, hexane, cyclohexane, benzene, and mixtures thereof.

If the optional polyolefin polymer/copolymer component is employed, the abovedescribed method of blending comprises introducing into the base fuel 0.0005-5.0, preferably 0.001-1.0 weight percent of the abovedescribed reaction product and from 0.001-1.0, preferably 0.01-0.5 weight percent of the abovedescribed optional polyolefin polymer/copolymer component. The polymer/copolymer component may be directly introduced into the hydrocarbon base fuel, or it may first be admixed with a hydrocarbon solvent such as toluene, xylene, or a C₂-C₁₀ alkylbenzene.

In another embodiment of the abovedescribed method of blending, the blending is accomplished by introducing into the base fuel the abovedescribed concentrate composition of the instant invention, the concentrate comprising the abovedescribed reaction product either alone or in combination with the optional polyolefin polymer/copolymer component.

## Claims

1. A method of preparing a motor fuel additive by reacting a dicarboxylic acid anhydride with a polyamine, characterised by reacting, at a temperature of 30 to 200°C:
(a) 1.5 to 2.5 moles of a hydrocarbyl-substituted dibasic acid anhydride of the formula 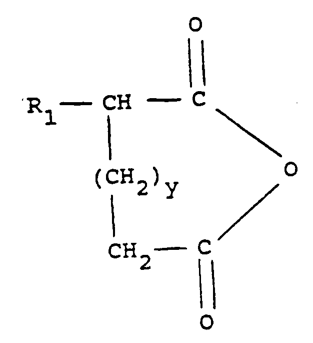 wherein R₁ is a hydrocarbyl radical having a molecular weight of 500 to 10,000 and y is 0 to 3; and
(b) 0.5 to 1.5 moles of a polyoxyalkylene diamine of the formula 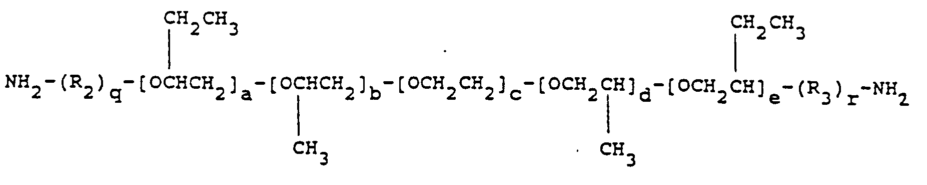 wherein R₂ and R₃ are C₁-C₁₂ alkylene groups, q and r are each 0 or 1, c is 2 to 150, b+d is 2 to 150, and a+e is 0 to 12.

2. A method according to Claim 1, characterised in that R₁ is a polypropenyl or polybutenyl group with a molecular weight of 500 to 2500.

3. A method according to Claim 1 or Claim 2, characterised in that the said hydrocarbyl-substituted dibasic acid anhydride reactant is a polyisobutenyl succinic acid anhydride of the formula: 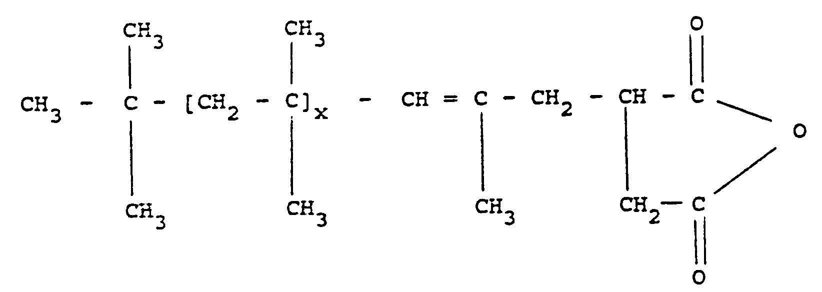 where x has a value of 10 to 30.

4. A method according to any one of Claims 1 to 3 characterised in that the said polyoxyalkylene diamine reactant has the formula: 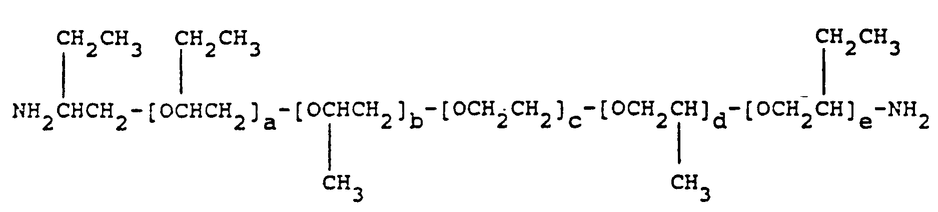 or: 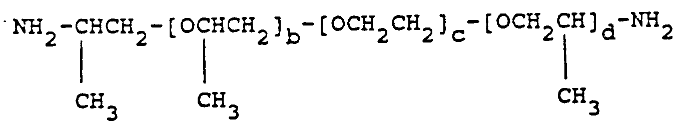 wherein c is about 2 to 50, b+d is about 2 to 50, and a+e is about 2 to 8.

5. A motor fuel composition comprising a mixture of hydrocarbons boiling in the range from 90 to 450°F (32 to 232°C), characterised in that it comprises from 0.0005 to 5.0 weight percent of the product of a method according to any one of Claims 1 to 4.

6. A composition according to Claim 5, characterised in that it additionally comprises from 0.001 to 1.0 weight percent of an olefin polymer having a molecular weight of 500 to 10,000 selected from homopolymers and copolymers of a C₂-C₁₀ olefinic hydrocarbon, the corresponding aminated or hydrogenated polymer or copolymer, or mixtures thereof.

7. A composition according to Claim 6, characterised in that the said olefin polymer is derived from one or more hydrocarbons selected from ethylene, propylene, butylene, isobutylene, amylene, hexylene, isoprene and butadiene.

8. A motor fuel composition according to Claim 6, characterised in that the said olefin polymer component is a mixture comprising a hydrocarbon solvent and:
(a) 50 to 75 parts by weight of polyisobutylene ethylene diamine of the formula 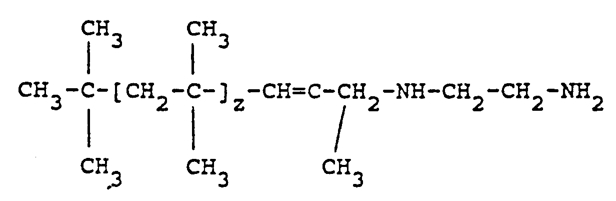 and
(b) 5 to 25 parts by weight of polyisobutylene of the formula 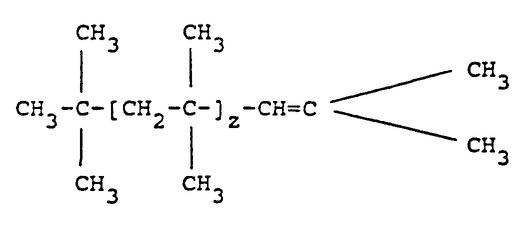 where z is 10 to 40.

9. A motor fuel composition according to any one of Claims 4 to 8, characterised in that it additionally comprises 0.001 to 1.0 weight percent of a natural or synthetic lubricating oil.

10. A motor fuel additive concentrate composition comprising a hydrocarbon solvent in admixture with additives, characterised in that the additives comprise:
(I) from 0.1 to 10.0 weight percent of the product of a process according to any one of Claims 1 to 4, and
(II) from 25.0 to 75.0 weight percent of a mixture comprising a hydrocarbon solvent and:
(a) 50 to 75 parts by weight of polyisobutylene ethylene diamine of the formula 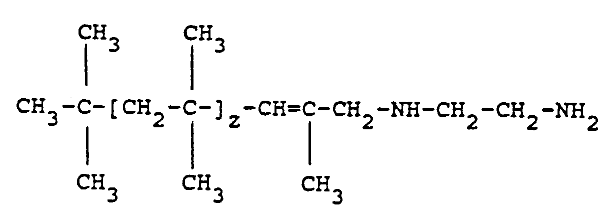 and
(b) 5 to 25 parts by weight of polyisobutylene of the formula 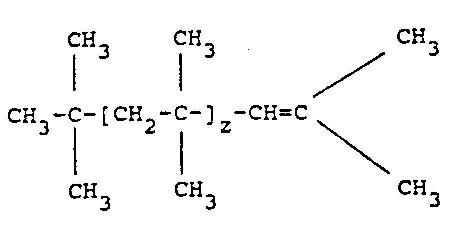 where z is 10 to 40.

## Patentansprüche

1. Ein Verfahren zur Herstellung eines Motorbrennstoffadditivs durch Umsetzen eines Dicarbonsäureanhydrids mit einem Polyamin, dadurch gekennzeichnet, daß bei einer Temperatur vor 30 bis 200°C:
(a) 1,5 bis 2,5 Mol eines Kohlenwasserstoff-substituierten zweibasigen Säureanhydrids der Formel 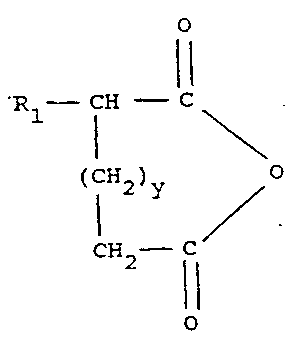 worin R₁ ein Kohlenwasserstoffrest mit einer relativen Molekülmasse von 500 bis 10.000 ist und y 0 bis 3 ist; und
(b) 0,5 bis 1,5 Mol eines Polyoxyalkylendiamins der Formel 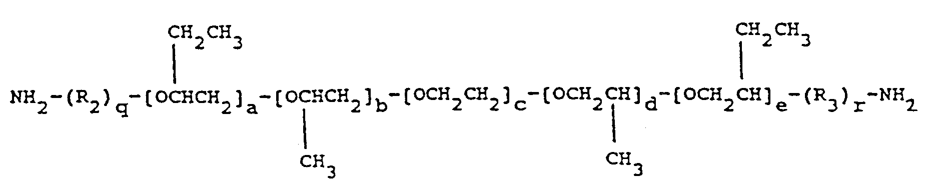 worin R₂ und R₃ C₁-C₁₂-Alkylengruppen sind, q und r jedes 0 oder 1 sind, c 2 bis 150 ist, b+d 2 bis 150 ist und a+e 0 bis 12 ist, zur Reaktion gebracht werden.

2. Ein Verfahren nach Anspruch 1, dadurch gekennzeichnet, daß R₁ eine Polypropenyl- oder Polybutenylgruppe mit einer relativen Molekülmasse von 500 bis 2500 ist.

3. Ein Verfahren nach Anspruch 1 oder Anspruch 2, dadurch gekennzeichnet, daß besagter Kohlenwasserstoff-substituierte zweibasige Säureanhydrid-Reaktant ein Polyisobutenylbernsteinsäureanhydrid der Formel ist: 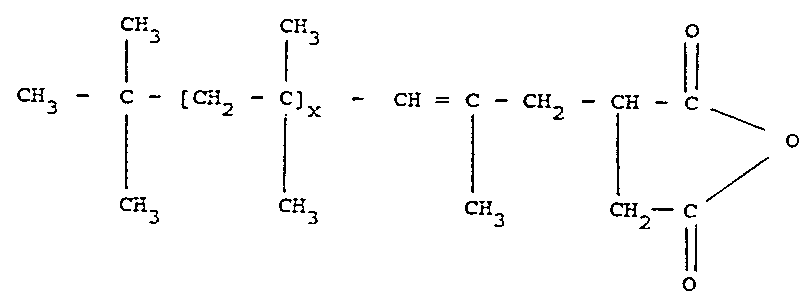 in der x einen Wert von 10 bis 30 hat.

4. Ein Verfahren nach einem der Ansprüche 1 bis 3, dadurch gekennzeichnet, daß der besagte Polyoxyalkylendiamin-Reaktand die Formel hat: 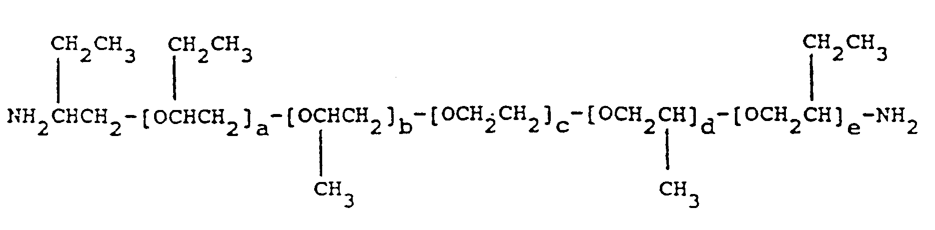 oder: 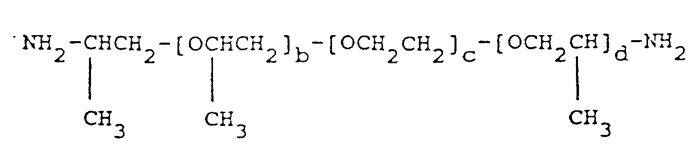 worin c etwa 2 bis 50 ist, b+d etwa 2 bis 50 ist und a+e etwa 2 bis 8 ist.

5. Eine Motorbrennstoffzusammensetzung, die ein Gemisch von Kohlenwasserstoffen umfaßt, die im Bereich von 90 bis 450°F (32° bis 232°C) sieden, dadurch gekennzeichnet, daß sie von 0,0005 bis 5,0 Gewichtsprozent des Produktes eines Verfahrens von einem der Ansprüche 1 bis 4 umfaßt.

6. Eine Zusammensetzung nach Anspruch 5, dadurch gekennzeichnet, daß sie zusätzlich von 0,001 bis 1,0 Gewichtsprozent eines Olefin-Polymers mit einer relativen Molekülmasse mit 500 bis 10.000 umfaßt, ausgewählt aus Homopolymeren und Copolymeren eines olefinischen C₂-C₁₀-Kohlenwasserstoffs, dem entsprechenden aminierten oder hydrierten Polymer oder Copolymer oder Mischungen derselben.

7. Eine Zusammensetzung nach Anspruch 6, dadurch gekennzeichnet, daß das besagte Olefin-Polymer abgeleitet ist von einem oder mehreren Kohlenwasserstoffen, ausgewählt aus Ethylen, Propylen, Butylen, Isobutylen, Amylen, Hexylen, Isopren und Butadien.

8. Eine Motorbrennstoffzusammensetzung nach Anspruch 6, dadurch gekennzeichnet, daß die besagte Olefin-Polymer-Komponente ein Gemisch ist, das ein Kohlenwasserstofflösungsmittel und:
(a) 50 bis 75 Gewichtsteile Polyisobutylenethylendiamin der Formel 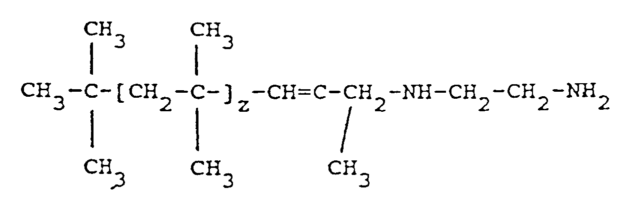 und
(b) 5 bis 25 Gewichtsteile Polyisobutylen der Formel 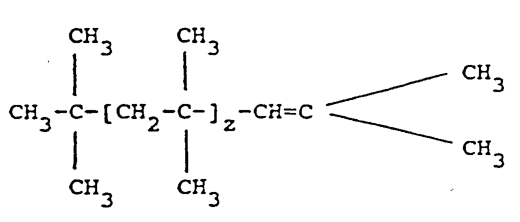 worin z 10 bis 40 ist, umfaßt.

9. Eine Motorbrennstoffzusammensetzung nach einem der Ansprüche 4 bis 8, dadurch gekennzeichnet, daß sie zusätzlich 0,001 bis 1,0 Gewichtsprozent eines natürlichen oder synthetischen Schmieröls umfaßt.

10. Eine Motorbrennstoffadditiv-Konzentratzusammensetzung, die ein Kohlenwasserstofflösungsmittel in Vermischung mit Additiven umfaßt, dadurch gekennzeichnet, daß die Additive:
(I) von 0,1 bis 10,0 Gewichtsprozent des Produktes eines Verfahrens nach einem der Ansprüche 1 bis 4 und
(II) von 25,0 bis 75,0 Gewichtsprozent eines Gemisches umfassen, das ein Kohlenwasserstofflösungsmittel und:
(a) 50 bis 75 Gewichtsteile Polyisobutylenethylendiamin der Formel 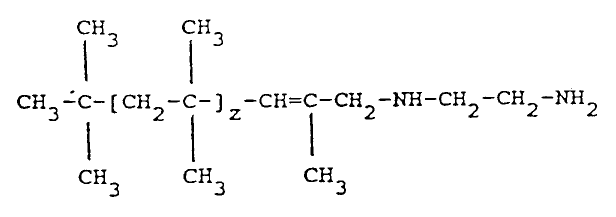 und
(b) 5 bis 25 Gewichtsteile Polyisobutylen der Formel 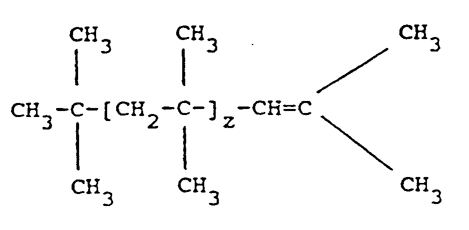 worin z 10 bis 40 ist, umfaßt.

## Revendications

1. Procédé de préparation d'un additif de combustible pour moteur par la réaction d'un anhydride d'acide dicarboxylique avec un polyamide, caractérisé par la réaction, à une température de 30 à 200 °C :
(a) de 1,5 à 2,5 mole(s) d'un anhydride d'acide dibasique substitué par un groupe hydrocarbyle, de formule 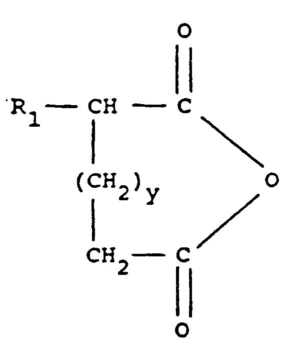 où R₁ est un radical hydrocarbyle ayant un poids moléculaire de 500 à 10 000 et y est 0 à 3 ; et
(b) de 0,5 à 1,5 mole d'une polyoxyalkylènediamine de formule 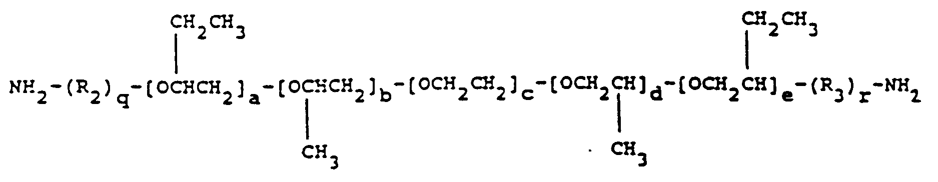 où R₂ et R₃ sont des groupes alkylène en C₁ à C₁₂, q et r sont chacun 0 ou 1, c est 2 à 150, b+d est 2 à 150, et a+e est 0 à 12.

2. Procédé selon la revendication 1, caractérisé en ce que R₁ est un groupe polypropényle ou polybutényle avec un poids moléculaire de 500 à 2 500.

3. Procédé selon la revendication 1 ou la revendication 2, caractérisé en ce que ledit réactif anhydride d'acide dibasique substitué par un groupe hydrocarbyle est un anhydride d'acide succinique polyisobuténylique de formule : 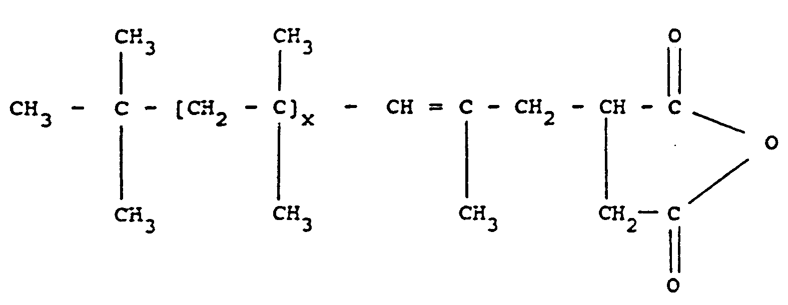 où x a une valeur de 10 à 30.

4. Procédé selon l'une quelconque des revendications 1 à 3, caractérisé en ce que ledit réactif polyoxyalkylène diamine a la formule : 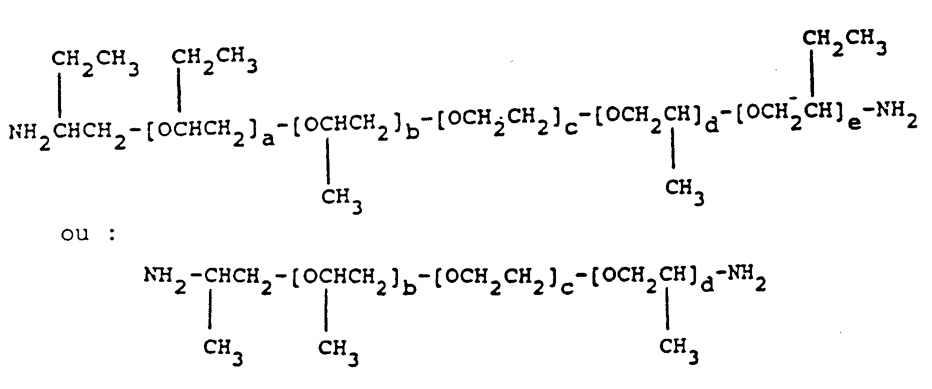 où c est environ 2 à 50, b+d est environ 2 à 50, et a+e est environ 2 à 8.

5. Composition de combustible pour moteur comprenant un mélange d'hydrocarbures bouillant dans la gamme de 90 à 450 °F (32 à 232 °C), caractérisée en ce qu'elle comprend de 0,0005 à 5,0 % en poids du produit d'un procédé selon l'une quelconque des revendications 1 à 4.

6. Composition selon la revendication 5, caractérisé en ce qu'elle comprend en plus de 0,001 à 1,0 % en poids d'un polymère oléfinique ayant un poids moléculaire de 500 à 10 000, choisi parmi les homopolymères et copolymères d'un hydrocarbure oléfinique en C₂ à C₁₀, le polymère ou copolymère aminé ou hydrogéné correspondant, ou les mélanges de ceux-ci.

7. Composition selon la revendication 6, caractérisée en ce que ledit polymère oléfinique est dérivé d'un ou plusieurs hydrocarbure(s) choisi(s) parmi l'éthylène, le propylène, le butylène, l'isobutylène, l'amylène, l'hexylène, l'isoprène et le butadiène.

8. Composition de combustible pour moteur selon la revendication 6, caractérisée en ce que ledit composant de polymère oléfinique est un mélange comprenant un solvant hydrocarboné et :
(a) 50 à 75 parties en poids d'une polyisobutylènediamine de formule 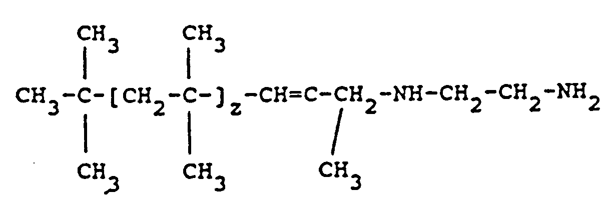 et
(b) 5 à 25 parties en poids d'un polyisobutylène de formule 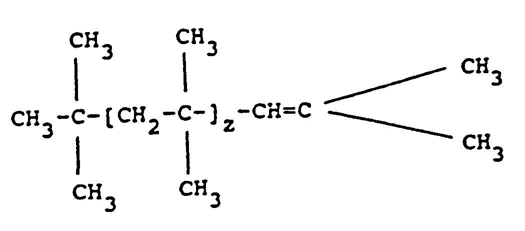 où z est 10 à 40.

9. Composition de combustible pour moteur selon l'une quelconque des revendications 4 à 8, caractérisée en ce qu'elle comprend en plus 0,001 à 1,0 % en poids d'une huile lubrifiante naturelle ou synthétique.

10. Composition de concentré d'additif de combustible pour moteur comprenant un solvant hydrocarboné en mélange avec des additifs, caractérisée en ce que les additifs comprennent :
(I) de 0,1 à 10,0 % en poids du produit d'un procédé selon l'une quelconque des revendications 1 à 4, et
(II) de 25,0 à 75,0 % en poids d'un mélange comprenant un solvant hydrocarboné et :
(a) 50 à 75 parties en poids d'une polyisobutylènediamine de formule 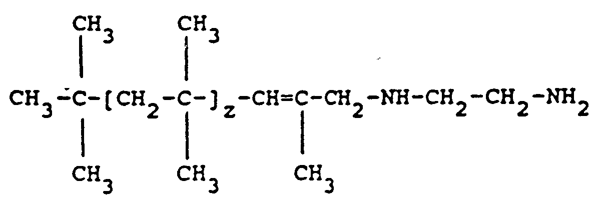 et
(b) 5 à 25 parties en poids d'un polyisobutylène de formule 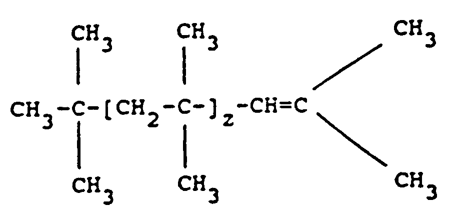 où z est 10 à 40.
